# EUROPEAN PATENT SPECIFICATION

(11) **EP 3 078 890 B1**
(45) Date of publication and mention of the grant of the patent: **21.03.2018**
(21) Application number: 16164559.3
(22) Date of filing: 08.04.2016
(51) Int. Cl.: F16K 31/40, F16K 31/02

(54) **TWO-STAGE VALVE**
ZWEISTUFIGES VENTIL
VANNE À DEUX ÉTAGES

(30) Priority: 09.04.2015 IT UB20150021
(43) Date of publication of application: 12.10.2016
(73) Proprietor: F-LAB S.r.l., 20094 Corsico (MI) (IT)
(72) Inventor: ANDREIS, Diego, 20145 MILANO (IT)
(74) Representative: Branca, Emanuela

(56) References cited:
- EP-A1- 2 239 486
- WO-A1-2015/015370
- US-A1- 2012 151 913

## Description

The present invention refers in general to a control device for a hydraulic circuit and, more specifically, to a two-stage valve configured to detect and manage the essential parameters of a fluid flowing in a hydraulic circuit.

A hydraulic circuit comprises two essential components that carry out the conversion of mechanical energy into hydraulic energy and vice-versa. These two components consist of a pump and a motor. In a hydraulic circuit, in addition to these two components, it is required for there to be devices that carry out a control action on the fluid. Due to operating requirements of the circuits it is thus necessary to intervene on the essential hydraulic magnitudes of the fluid, in other words pressure and flow rate, as well as on the direction of the fluid flow.

The devices proposed to perform this control function of the fluid are called valves, which can be grouped into three main categories:
- directional valves;
- flow rate valves;
- pressure valves.

In general, the above categories of valves can only take up two states: actuated and not actuated. This means that the state taken up by the actuator of the valve, typically consisting of a solenoid, can cause the closure and the complete opening of the valve shutter, but it does not allow any intermediate position of such a shutter.

Moreover there are continuous positioning valves, like proportional valves, which are able to take up precise intermediate positions between the completely open position and the totally closed position of the shutter. This way of operating makes it possible not only to control the direction of the flow, but also to adjust both the flow rate and possibly the pressure thereof downstream of the shutter through the load losses caused by the shutter itself.

In the panorama of valves available, a last important category of directional and/or proportional valves concerns two-stage valves. A two-stage valve substantially consists of two directional valves joined in a single valve body. The control system of the two-stage valve, typically consisting of a solenoid, acts on a small directional valve, or pilot valve, which uses the fluid of the hydraulic circuit to control the main valve. This type of two-stage valve becomes necessary in large sized valves, which operate in high pressure hydraulic circuits, because the great forces required by the direct actuation of the shutter could not be generated only by the solenoid. In two-stage valves, on the other hand, the solenoid provides sufficient force to actuate only the pilot stage, of small size, which through suitable pilot lines hydraulically controls the shutter of the main valve.

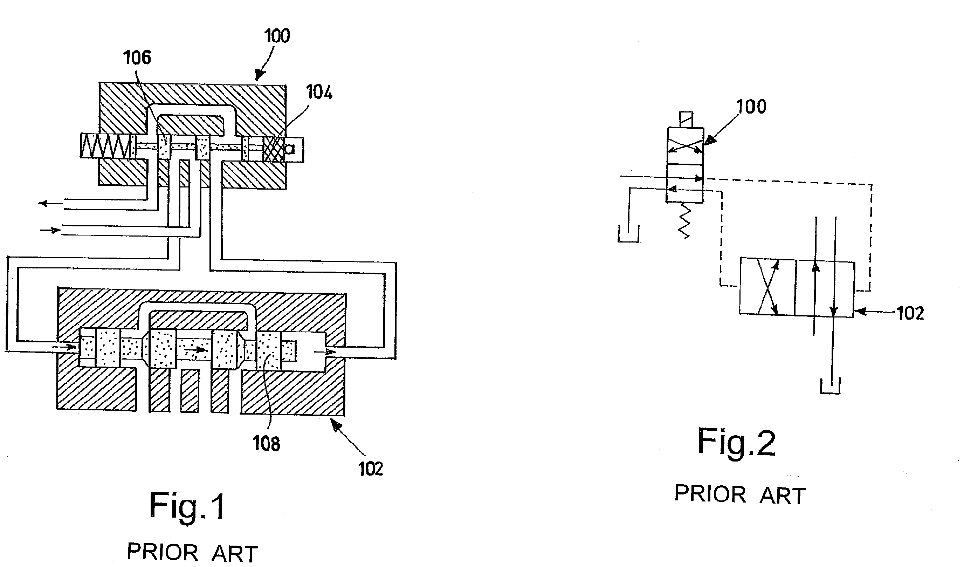

A typical scheme of a two-stage valve is shown in figures 1 and 2. In figure 1 the pilot valve is indicated with reference numeral 100, whereas the main valve is indicated with reference numeral 102. The pilot valve 100 is provided with an actuator device 104, for example consisting of a solenoid. By energising the solenoid 104, the shutter 106 of the pilot valve 100 moves axially to the left with reference to figure 1. This allows the fluid, conveyed through suitable channels, to hydraulically actuate the shutter 108 of the main valve 102, axially moving it to the right with reference to figure 1.

A known two-stage valve, therefore, is particularly bulky and heavy, since it consists of two distinct valves interconnected through suitable channels. In addition, although it is provided with an actuator that controls only the shutter of the pilot valve, a known two-stage valve in any case consumes a substantial amount of electrical energy in order to be able to operate correctly.

A known two-stage valve, in particular a two-stage valve with on/off function, is described in document EP 2 239 486 A1. Another known two-stage valve is described in document US 2012/0151913 A1.

The purpose of the present invention is therefore to make a two-stage valve, both with on/off function, and with proportional function, which is able to solve the aforementioned drawbacks of the prior art in an extremely simple, cost-effective and particularly functional manner.

In detail, a purpose of the present invention is to make a two-stage valve that allows a substantial reduction in size and weight with respect to a conventional two-stage valve.

Another purpose of the present invention is to make a two-stage valve with valve normally closed functionality, which thus has the ability to autonomously interrupt the flow at the moment when there is no electrical power supply.

A further purpose of the present invention is to make a two-stage valve that is able to reduce the electrical power and the consumption with respect to a conventional two-stage valve.

Yet another purpose of the present invention is to make a two-stage valve that is able to detect and manage the essential parameters of the fluid flowing in the hydraulic circuit in which the valve itself is inserted.

These and other purposes according to the present invention are accomplished by making a two-stage valve as outlined in claim 1.

Further characteristics of the invention are highlighted by the dependent claims, which are an integral part of the present description.

In general, the two-stage valve according to the present invention is provided with a pilot stage that comprises an actuator device made of a shape-memory alloy (SMA), typically consisting of a wire of very small sections (between 20 and 500 micron in diameter). The application, on a two-stage valve, of an actuator device made of a shape-memory alloy is particularly advantageous because, thanks to this technology, it is possible to obtain a pilot valve of very small dimensions and therefore easy to integrate in the main valve body without modifying the dimensions thereof.

The fact that the two-stage principle is exploited and, consequently, that much smaller actuation forces of the shutter have to be managed, with respect to those that there would be in direct actuation conditions of the valve, presumes that SMA actuators can be used with very thin wires and therefore that are very fast. This also makes it possible to exceed the typical maximum operating frequency for a SMA actuator device, which is about 1 Hz, even by a factor of 10 (thus reaching the final frequency of 10 Hz).

Moreover, the two-stage valve according to the present invention is able to interrupt the fluid flow autonomously, even in the absence of an electrical power supply. This is due to the fact that inside the pilot stage a contrast element of the actuator piston acts that takes the pilot stage back into the closing condition at the moment when the electrical power supply of the shape memory element stops.

The two-stage valve according to the present invention makes it possible to obtain a pilot stage perfectly integrated in the valve body and, therefore, with low volumes. The two-stage valve according to the present invention is also able to control high flow rates and pressures, absorbing a negligible electric power with respect to the hydraulic power.

In addition, a proportional control based on a SMA actuator device makes it possible to reach high levels of precision in the modulation of the pilot flow, even with very limited ducts and flow rates. This makes it possible to manage the indirect proportional modulation of the flow on the main stage of the valve.

Since the two-stage valve according to the present invention has a component made of a shape-memory alloy as actuator device for managing the fluid, through the pilot stage, it is intrinsic to use an electronic control board that manages the current needed to move the SMA wire. As already stated, the control can also be of the proportional type, thus providing the possibility of modulating the flow of the pilot fluid to be managed in a linear manner.

The electronic control board of the two-stage valve is configured to process, indirectly and thanks to the properties of the shape-memory alloy, some intrinsic parameters of the fluid, like for example the pressure, the flow rate and the temperature. Indeed, thanks to the fact that through the reading of the electrical resistance of the SMA wire it is possible to obtain the length of the wire itself and therefore the actual opening position of the valve, through the reading of the energy injected it is possible to understand the force with which the wire is acting and therefore indirectly the pressure of the fluid. Moreover, considering that the total amount of energy need to reach the transition of the shape-memory alloy is also a function of the temperature of the SMA actuator device, it will be simple to make these parameters available without needing the use of specific sensors on the two-stage valve.

The same electronic control board of the two-stage valve can also integrate a wireless remote communication module (for example with Wi-Fi technology) configured to make the aforementioned "field" parameters of the fluid available. Such a remote communication module can interface and therefore can communicate wirelessly with portable devices, such as smartphones, tablets or similar, or can interface with the internet and therefore communicate with remote terminals via web.

The characteristics and advantages of a two-stage valve according to the present invention will become clearer from the following description, given as an example and not for limiting purposes, referring to the attached schematic drawings, in which:
figures 1 and 2 show respective schemes of a two-stage valve according to the prior art;

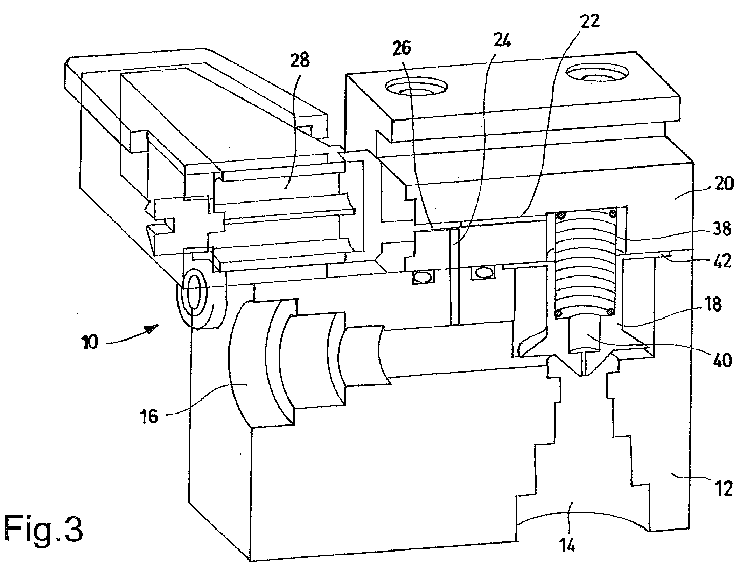

figure 3 is an isometric section view of a first embodiment of the two-stage valve according to the present invention;
figure 4 is another section view of the two-stage valve of figure 3;
figure 5 is a perspective view of a possible embodiment of the actuator device of the valve of figure 3;
figure 6 is a section view of a second embodiment of the two-stage valve according to the present invention;

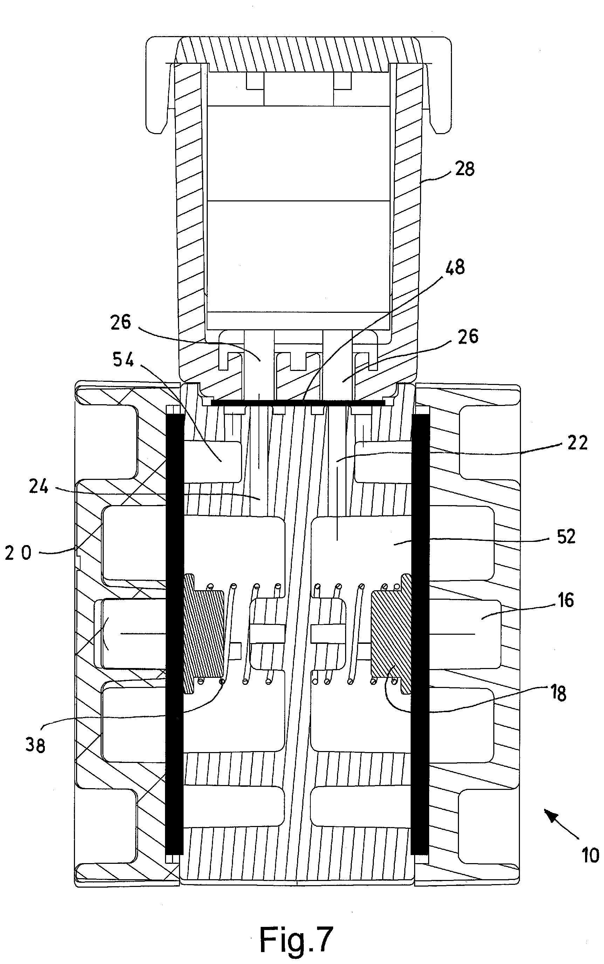

figure 7 is another section view of the two-stage valve of figure 6; and

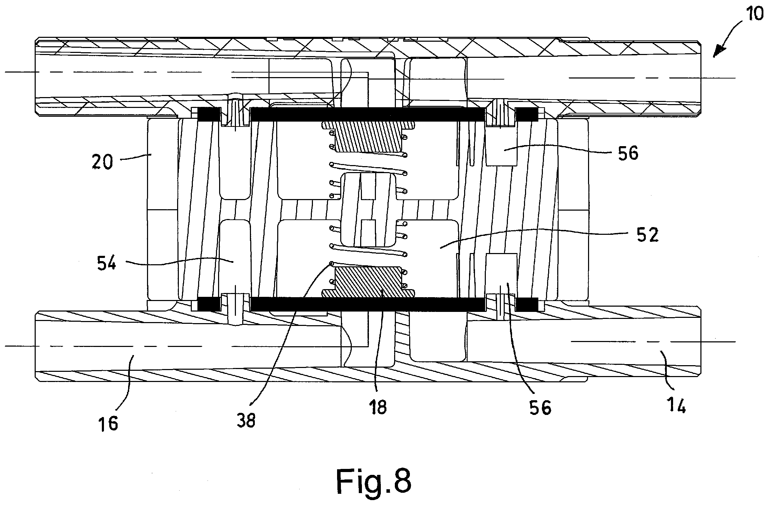

figure 8 is a further section view of the two-stage valve of figure 6.

With reference to the figures, some embodiments of the two-stage valve according to the present invention are shown, wholly indicated with reference numeral 10. The two-stage valve 10 comprises a first stage, constituted by a main valve body 12 provided with at least one fluid inlet duct 14 for inletting fluid into the main valve and with at least one fluid outlet duct 16 for outletting fluid out from the main valve. Between the fluid inlet duct 14 of the main valve and the fluid outlet duct 16 of the main valve at least one shutter element 18 of the main valve is interposed, configured to put selectively in fluid communication such a fluid inlet duct 14 of the main valve with such a fluid outlet duct 16 of the main valve.

The two-stage valve 10 also comprises a second stage, constituted by a pilot valve body 20 provided with at least one fluid inlet duct 22 for inletting fluid into the pilot valve and with at least one fluid outlet duct 24 for outletting fluid out from the pilot valve. The fluid inlet duct 22 of the pilot valve is put in fluid communication with the fluid inlet duct 14 of the main valve, whereas the fluid outlet duct 24 of the pilot valve is put in fluid communication with the fluid outlet duct 16 of the main valve.

Between the fluid inlet duct 22 of the pilot valve and the fluid outlet duct 24 of the pilot valve at least one shutter element 26 of the pilot valve is interposed, configured to put selectively in fluid communication such a fluid inlet duct 22 of the pilot valve with such a fluid outlet duct 24 of the pilot valve. In this way, as will be specified more clearly hereinafter, the opening of the shutter element 26 of the pilot valve generates a fluid flow passing through the fluid inlet duct 22 of the pilot valve and the fluid outlet duct 24 of the pilot valve, the pressure of such a fluid flow generating the opening of the shutter element 18 of the main valve.

The shutter element 26 of the pilot valve consists of a piston movable with rectilinear motion under the action of an actuator device 28 comprising at least one wire 30 made of a shape-memory alloy. The wire 30 is able to apply a force, preferably a traction force, onto the shutter element 26 of the pilot valve by means of the temperature variation (heating) determined by Joule effect by the passage of an electric current through the wire 30 itself.

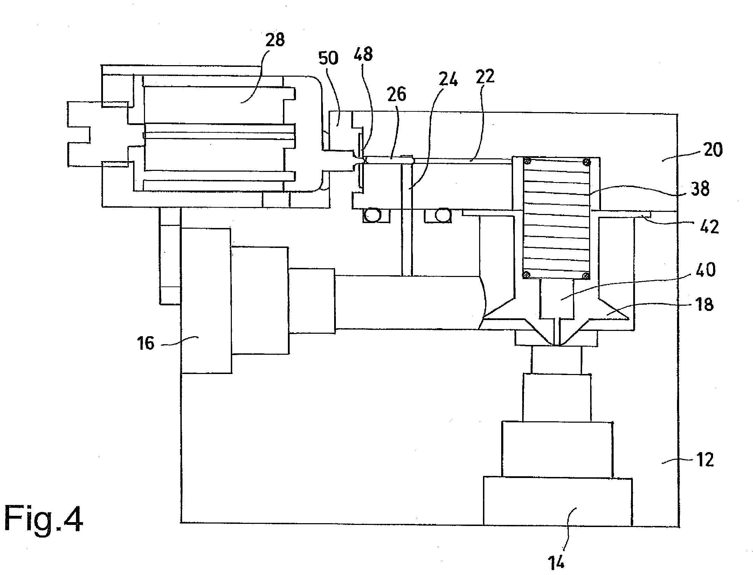

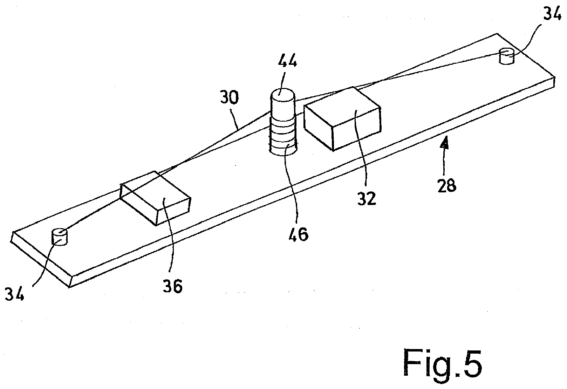

In detail, the shutter element 26 of the pilot valve is in normally closed condition when the respective actuator device 28 is not activated. The shutter element 26 of the pilot valve is kept in normally closed condition by a thruster element 44 (figure 5) belonging to the actuator device 28 and actuated by an elastic element 46, like for example a contrast spring operating by compression. The traction force exerted by the wire 30 made of a shape-memory alloy on the shutter element 26 of the pilot valve, where such a force is generated by the passage of electric current through the wire 30 itself, allows the elastic force generated by the elastic element 46 to be overcome, so as to take such a shutter element 26 of the pilot valve into partially or totally open condition. Between the actuator device 28 and the pilot valve body 20 an elastic separation membrane 48 is also interposed (figure 4), kept in compression by a squash flange 50.

In the two-stage valve 10 according to the present invention the traction force exerted by the wire 30 must compensate only the contrast force of the elastic element 46, since the pressure, and therefore the relative force exerted by the fluid, promotes the traction force itself of the wire 30. In this way, it is possible to use shape memory wires 30 with small sections, therefore with higher switching speeds, also keeping the mechanical stress of the wire 30 itself and therefore the useful life of the two-stage valve 10 under control, since it is independent of the pressure generated by the fluid.

The actuator device 28 is thus provided with an electronic control and communication system comprising a control board 32 in turn provided with respective power supply connections. The control board 32 is also provided with operative connection means 34, for example consisting of one or more mechanical and electrical crimps, with the wire 30 made of a shape-memory alloy. The control board 32 is configured to indirectly obtain determined physical parameters of the fluid through the characteristics of the wire 30 made of a shape-memory alloy. The electronic control and communication system is further provided with a wireless remote communication module 36, interfaceable via web with remote terminals and/or with portable devices and configured to make available the physical parameters of the fluid on such remote terminals and/or portable devices.

In order to verify the totally or partially open condition, or the normally closed condition, of the pilot valve, the control board 32 can be provided with means for detecting the relative position of the thruster element 44. These detecting means can consist of one or more sensors, like for example position sensors of the magnetic, capacitive, optical, Hall effect type, etc. Alternatively, these detecting means can consist of a device for reading the electrical resistance of the wire 30 made of a shape-memory alloy.

The operating principle of the two-stage valve 10 provides the shutter element 18 of the main valve, which consists of a piston movable with rectilinear motion, to be in the normally closed position pushed both by the action of a contrast spring 38, and by the pressure of the fluid flowing in the two-stage valve 10 itself. Indeed, the shutter element 18 of the main valve is internally hollow and inside it defines a balancing chamber 40 in which the fluid is under pressure when the fluid inlet duct 22 of the pilot valve is kept closed by the shutter element 26 of the pilot valve, as well as because the shutter element 18 of the main valve is equipped with a membrane 42 that externally separates the main valve body 12 and the pilot valve body 20.

At the moment at which the wire 30 made of a shape-memory alloy is actuated under traction, the at least partial opening of the shutter element 26 of the pilot valve is obtained, so that the fluid inlet duct 22 of the pilot valve is put in communication with the fluid outlet duct 24 of the pilot valve and, therefore, with the fluid outlet duct 16 of the main valve. Consequently, both the pressure inside the balancing chamber 40 of the shutter element 18 of the main valve, and the closing thrust of such a shutter element 18 of the main valve decrease. Therefore, the shutter element 18 of the main valve opens pushed by the pressure of the fluid contained in the fluid inlet duct 14 in the main valve, determining the passage of the fluid flow in the main valve body 12.

If the two-stage valve 10 is suitably sized, by modulating the stroke of the shutter element 26 of the pilot valve in a controlled manner, it is possible to obtain controlled variations of the pressure in the balancing chamber 40. Consequently, it is possible to equally proportionally modulate the stroke of the shutter element 18 of the main valve, obtaining different flow rates of the fluid flow in the main valve body 12.

The control board 32 inserted inside the actuator device 28 is provided with a modulator configured to modulate in amplitude the electric current necessary to heat the wire 30 made of a shape-memory alloy, so as to obtain the controlled displacement of the shutter element 26 of the pilot valve. Through the control board 32 and through the resistance parameters of the wire 30 made of a shape-memory alloy it is also possible to interpret the characteristic parameters of the fluid, like for example temperature, pressure and flow rate. These parameters can be made available also outside of the two-stage valve 10, in wireless mode, through the wireless remote communication module 36 belonging to the electronic control and communication system and associated with the control board 32.

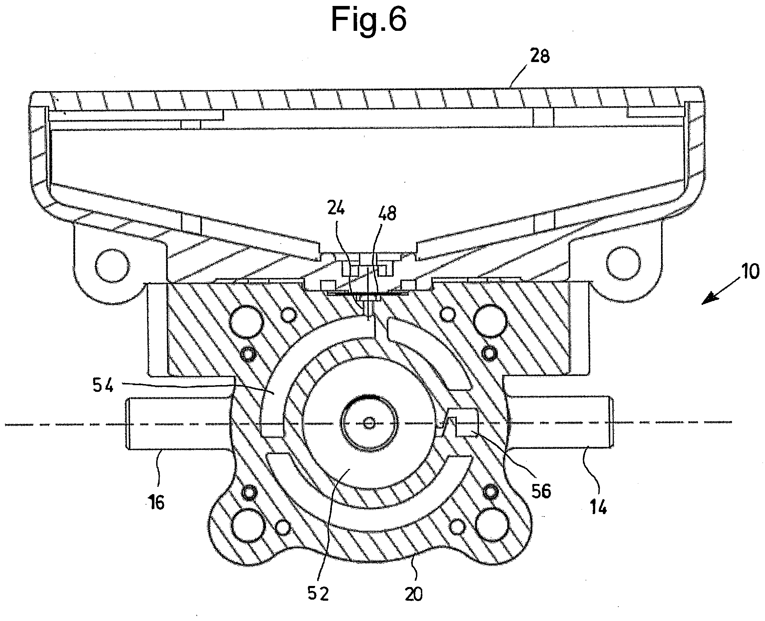

Figure 6 shows a second embodiment of the two-stage valve 10 according to the present invention. This two-stage valve 10 is actually a double valve, with a pair of fluid inlet ducts 22 of the pilot valve, completely independent from one another, and a corresponding pair of fluid outlet ducts 24 of the pilot valve, also completely independent from one another. Two distinct shutter elements 26 of the pilot valve are thus provided, able to be controlled independently and proportionally through the control board 32.

In this way, a single actuator device 28 is exploited, with two wires 30 made of a shape-memory alloy and independently controlled are integrated, which act on the respective shutter elements 26 of the pilot valve. For this reason, the two-stage valve 10 has a high level of integration in order to keep the dimensions as compact as possible.

In this second embodiment, moreover, the two-stage valve 10 is provided with a fluid flow distribution system arranged outside of a pilot chamber 52 that puts in fluid communication, through the interposition of a joining duct 56, the fluid inlet duct 14 of the main valve and the fluid inlet ducts 22 of the pilot valve. The fluid flow distribution system makes the two-stage valve 10 even more compact and allows the fluid inlet ducts 22 of the pilot valve and the fluid outlet ducts 24 of the pilot valve to be formed directly and at least partially on the main valve body 12. In other words, the main valve body 12 is made integral with the pilot valve body 20.

In detail, with reference in particular to figure 6, the fluid flow distribution system comprises a set of outer ducts that form a distribution chamber 54, having a substantially circular shape, which surrounds the central pilot chamber 52. The distribution chamber 54 is arranged in fluid connection with the elastic separation membrane 48 on which the two shutter elements 26 of the pilot valve act. These two shutter elements 26 determine the calibrated passage of fluid in order to unbalance the pressure in the pilot chamber 52.

Operatively, the fluid enters into the two-stage valve 10 through the fluid inlet duct 14 of the main valve, passes through the joining duct 56 and flows into the pilot chamber 52. The fluid is thus managed by the pilot valve through the respective inlet 22 and outlet 24 ducts. The fluid outlet ducts 24 of the pilot valve send such fluid into the distribution chamber 54 and, from here, towards the fluid outlet duct 16 of the main valve. The substantially circular shape of the distribution chamber 54 makes it possible to arrange the fluid inlet duct 14 in the main valve and the fluid outlet duct 16 of the main valve in any radial position with respect to the distribution chamber 54 itself.

It has thus been seen that the two-stage valve according to the present invention achieves the purposes highlighted earlier, in particular obtaining the following advantages with respect to a conventional two-stage valve like the one illustrated in figures 1 and 2:
- substantial reduction in size;
- lighter;
- constructive simplicity and cost-effectiveness;
- speed of switching;
- reduction of electric power and of electric power consumption;
- absolute quietness;
- greater precision in the proportional control of the fluid;
- possibility of communicating wirelessly with remote devices;
- possible presence of sensors configured to detect the essential parameters of the fluid managed, like for example pressure, flow rate and temperature.

With respect to a known two-stage valve like the one described in document EP 2 239 486 A1, the two-stage valve of the present invention also obtains the following advantages:
- it is a two-stage valve with normally closed valve functionality, i.e. able to interrupt the fluid flow autonomously in the absence of electrical power supply;
- precision in the proportional control of the fluid, obtainable thanks to the precision of positioning of the SMA actuator device through position reading through the variation of the electrical resistance of the shape memory wire, i.e. through reading of position sensors integrated in the electronic control system;
- possibility of obtaining the parameters of the fluid, like the pressure, through the SMA wire;
- possibility of having the separation membrane of the pilot stage independent from the opening and closing element of the main stage.

Moreover, the calibrated pilot hole, which determines the unbalancing of the pressures and therefore the operation of the valve, is obtained directly in the valve body and not in the mobile element. This involves a higher level of reliability and precision in the management of the pressure variation, particularly in proportional terms.

The two-stage valve of the present invention thus conceived can in any case undergo numerous modifications and variants. In practice, the materials used, as well as the shapes and sizes, can be whatever according to the technical requirements.

The scope of protection of the invention is therefore defined by the attached claims.

## Claims

1. Two-stage valve (10) comprising:
- a first stage constituted by a main valve body (12) provided with at least one fluid inlet duct (14) for inletting fluid into the main valve and with at least one fluid outlet duct (16) for outletting fluid out from the main valve, between the fluid inlet duct (14) of the main valve and the fluid outlet duct (16) of the main valve being interposed at least one shutter element (18) of the main valve, configured to put selectively in fluid communication said fluid inlet duct (14) of the main valve with said fluid outlet duct (16) of the main valve; and
- a second stage constituted by a pilot valve body (20) provided with at least one fluid inlet duct (22) for inletting fluid into the pilot valve and with at least one fluid outlet duct (24) for outletting fluid out from the pilot valve, wherein said at least one fluid inlet duct (22) of the pilot valve is put in fluid communication with the fluid inlet duct (14) of the main valve, whereas said at least one fluid outlet duct (24) of the pilot valve is put in fluid communication with the fluid outlet duct (16) of the main valve, and wherein between said at least one fluid inlet duct (22) of the pilot valve and said at least one fluid outlet duct (24) of the pilot valve is interposed at least one shutter element (26) of the pilot valve, configured to put selectively in fluid communication said at least one fluid inlet duct (22) of the pilot valve with said at least one fluid outlet duct (24) of the pilot valve, so that the opening of said at least one shutter element (26) of the pilot valve generates a fluid flow passing through said at least one fluid inlet duct (22) of the pilot valve and said at least one fluid outlet duct (24) of the pilot valve, the pressure of said fluid flow generating the opening of the shutter element (18) of the main valve,
wherein said at least one shutter element (26) of the pilot valve is actuated by an actuator device (28) comprising at least one wire (30) made from a shape-memory alloy, said at least one wire (30) being able to apply a force onto said at least one shutter element (26) of the pilot valve as a consequence of a temperature variation determined by the Joule effect by the flow of an electric current through said at least one wire (30), and wherein said at least one shutter element (26) of the pilot valve consists of a piston movable with rectilinear motion, the two-stage valve (10) being **characterised in that** said piston is kept in a normally closed condition by a thruster element (44) belonging to the actuator device (28) and actuated by an elastic element (46), the force exerted by said at least one wire (30) made from a shape-memory alloy on said at least one shutter element (26) of the pilot valve allowing the elastic force generated by said elastic element (46) to be overcome, so as to take said at least one shutter element (26) of the pilot valve into a partially or a totally open condition.

2. Two-stage valve (10) according to claim 1, **characterised in that** the actuator device (28) is provided with an electronic control and communication system comprising a control board (32) in turn provided with both respective power supply connections, and with operative connection means (34) with said at least one wire (30) made from a shape-memory alloy, said control board (32) being configured to indirectly obtain determined physical parameters of the fluid through the characteristics of said at least one wire (30), said physical parameters of the fluid being selected from the group consisting of pressure, flow rate and temperature.

3. Two-stage valve (10) according to claim 2, **characterised in that** the electronic control and communication system is provided with a wireless remote communication module (36), interfaceable via web with remote terminals and/or with portable devices and configured to make available the physical parameters of the fluid on said remote terminals and/or portable devices.

4. Two-stage valve (10) according to any one of claims 1 to 3, **characterised in that** said elastic element (46) consists of a contrast spring operating by compression.

5. Two-stage valve (10) according to any one of claims 1 to 4, **characterised in that** the shutter element (18) of the main valve consists of a piston movable with rectilinear motion and kept under normally closed condition both by the thrusting action of a contrast spring (38), and by the pressure of the fluid flowing in the two-stage valve (10).

6. Two-stage valve (10) according to claim 5, **characterised in that** the shutter element (18) of the main valve is internally hollow and defines a balancing chamber (40) inside it, wherein the fluid is under pressure when said at least one fluid inlet duct (22) of the pilot valve is kept closed by said at least one shutter element (26) of the pilot valve, and **in that** the shutter element (18) of the main valve is provided with a membrane (42) that separates externally the main valve body (12) and the pilot valve body (20), the at least partial opening of said at least one shutter element (26) of the pilot valve puts in communication said at least one fluid inlet duct (22) of the pilot valve with said at least one fluid outlet duct (24) of the pilot valve and, therefore, with the fluid outlet duct (16) of the main valve, so as to reduce both the pressure inside the balancing chamber (40), and the closing thrust of said shutter element (18) of the main valve, so that the shutter element (18) of the main valve opens due to the pressure of the fluid contained in the fluid inlet duct (14) of the main valve, causing the fluid flow to pass in the main valve body (12).

7. Two-stage valve (10) according to claim 6, **characterised in that** the control board (32) is provided with a modulator configured to modulate in amplitude the electric current required to heat said at least one wire (30) made from a shape-memory alloy, so as to obtain the controlled displacement of said at least one shutter element (26) of the pilot valve and, therefore, to obtain controlled variations of the pressure in the balancing chamber (40), in order to proportionally modulate the stroke of the shutter element (18) of the main valve in order to determine different fluid flow rates in the main valve body (12).

8. Two-stage valve (10) according to any one of claims 2 a 7, **characterised in that** the control board (32) is provided with means for detecting the relative position of the thruster element (44), configured to verify the totally or partially open condition, or the normally closed condition, of the pilot valve.

9. Two-stage valve (10) according to claim 8, **characterised in that** said position detecting means consist of one or more position sensors.

10. Two-stage valve (10) according to claim 8, **characterised in that** said position detecting means consist of a device for reading the electrical resistance of said at least one wire (30) made of a shape-memory alloy.

11. Two-stage valve (10) according to any one of claims 1 to 10, **characterised in that** it comprises a fluid flow distribution system arranged outside of a pilot chamber (52) that puts in fluid communication, through the interposition of a joining duct (56), the fluid inlet duct (14) of the main valve and said at least one fluid inlet duct (22) of the pilot valve, the fluid flow distribution system in turn comprising a set of external ducts that form a distribution chamber (54), having a substantially circular shape, which surrounds said pilot chamber (52), said distribution chamber (54) being put in fluid connection with an elastic separation membrane (48) on which said at least one shutter element (26) of the pilot valve acts.

12. Two-stage valve (10) according to claim 11, **characterised in that** it comprises a pair of fluid inlet ducts (22) of the pilot valve, completely independent from one another, a corresponding pair of fluid outlet ducts (24) of the pilot valve, also completely independent from one another, and two distinct shutter elements (26) of the pilot valve, able to be controlled independently and proportionally through the control board (32).

13. Two-stage valve (10) according to claim 12, **characterised in that** it comprises two wires (30) made of a shape-memory alloy and independently controlled, which act on the respective shutter elements (26) of the pilot valve.

14. Two-stage valve (10) according to any one of the previous claims, **characterised in that** the main valve body (12) is made integral with the pilot valve body (20) and **in that** said at least one fluid inlet duct (22) of the pilot valve and said at least one fluid outlet duct (24) of the pilot valve are at least partially formed on the main valve body (12).

15. Two-stage valve (10) according to any one of the previous claims, **characterised in that** said at least one wire (30) made of a shape-memory alloy has a section diameter comprised between 20 and 500 micron.

## Patentansprüche

1. Zweistufiges Ventil (10), umfassend:
- eine erste Stufe, bestehend aus einem Hauptventilkörper (12), der mit wenigstens einem Fluideintrittskanal (14) für den Fluideintritt in das Hauptventil und mit wenigstens einem Fluidaustrittskanal (16) für den Fluidaustritt aus dem Hauptventil, wobei zwischen dem Fluideintrittskanal (14) des Hauptventils und dem Fluidaustrittskanal (16) des Hauptventils wenigstens ein Absperrelement (18) des Hauptventils eingefügt ist, das ausgebildet ist, um den Fluideintrittskanal (14) des Hauptventils mit dem Fluidaustrittskanal (16) des Hauptventils selektiv in fluidische Verbindung zu bringen; und
- eine zweite Stufe, bestehend aus einem Steuerventilkörper (20), der mit wenigstens einem Fluideintrittskanal (22) für den Fluideintritt in das Steuerventil und mit wenigstens einem Fluidaustrittskanal (24) für den Fluidaustritt aus dem Steuerventil versehen ist, wobei der wenigstens eine Fluideintrittskanal (22) des Steuerventils in fluidische Verbindung mit dem Fluideintrittskanal (14) des Hauptventils gebracht wird, während der wenigstens eine Fluidaustrittskanal (24) des Steuerventils in fluidische Verbindung mit dem Fluidaustrittskanal (16) des Hauptventils gebracht wird und wobei zwischen dem wenigstens einen Fluideintrittskanal (22) des Steuerventils und dem wenigstens einen Fluidaustrittskanal (24) des Steuerventils wenigstens ein Absperrelement (26) des Steuerventils eingefügt ist, das ausgebildet ist, um den wenigstens einen Fluideintrittskanal (22) des Steuerventils mit dem wenigstens einen Fluidaustrittskanal (24) des Steuerventils selektiv in fluidische Verbindung zu bringen, so dass die Öffnung des wenigstens einen Absperrelements (26) des Steuerventils eine Fluidströmung erzeugt, die durch den wenigstens einen Fluideintrittskanal (22) des Steuerventils und durch den wenigstens einen Fluidaustrittskanal (24) des Steuerventils hindurchgeht, wobei der Druck der Fluidströmung die Öffnung des Absperrelements (18) des Hauptventils erzeugt,
wobei das wenigstens eine Absperrelement (26) des Steuerventils durch eine Betätigungseinrichtung (28) betätigt wird, umfassend wenigstens einen Draht (30) aus einer Formgedächtnislegierung, wobei der wenigstens eine Draht (30) in der Lage ist, eine Kraft auf das wenigstens eine Absperrelement (26) des Steuerventils infolge einer durch Joule-Effekt bewirkten Temperaturänderung aufzubringen, die durch das Fließen eines elektrischen Stroms durch den wenigstens einen Draht (30) bewirkt wird, und wobei das wenigstens eine Absperrelement (26) des Steuerventils aus einem mit geradliniger Bewegung beweglichen Kolben besteht, wobei das zweistufige Ventil (10) **dadurch gekennzeichnet ist, dass** der Kolben durch ein Schubelement (44) in einer normalerweise geschlossenen Stellung gehalten wird, das zu der Betätigungsvorrichtung (28) gehört und von einem elastischen Element (46) betätigt wird, wobei es die von dem wenigstens einen Draht (30) aus einer Formgedächtnislegierung auf das wenigstens eine Absperrelement (26) des Steuerventils aufgebrachte Kraft der von dem elastischen Element (46) erzeugten elastischen Kraft erlaubt, überwunden zu werden, so dass das wenigstens eine Absperrelement (26) des Steuerventils in eine teilweise oder vollständig geöffnete Stellung gebracht wird.

2. Zweistufiges Ventil (10) nach Anspruch 1, **dadurch gekennzeichnet, dass** die Betätigungseinrichtung (28) mit einem elektronischen Steuerungs- und Kommunikationssystem versehen ist, umfassend eine Steuerkarte (32), die ihrerseits sowohl mit Stromversorgungsverbindungen als auch mit Wirkverbindungsmitteln (34) mit dem wenigstens einen, aus einer Formgedächtnislegierung hergestellten Draht (30) versehen ist, wobei die Steuerkarte (32) ausgebildet ist, um auf indirekte Weise bestimmte physikalische Parameter des Fluids durch die Merkmale des wenigstens einen Drahtes (30) zu erhalten, wobei die physikalischen Parameter des Fluids aus der Gruppe bestehend aus Druck, Strömungsgeschwindigkeit und Temperatur ausgewählt sind.

3. Zweistufiges Ventil (10) nach Anspruch 2, **dadurch gekennzeichnet, dass** das elektronische Steuerungs- und Kommunikationssystem mit einem drahtlosen Fernkommunikationsmodul (36) versehen ist, das über das Web mit entfernten Endgeräten und/oder tragbaren Geräten verbindbar und konfiguriert ist, um die physikalischen Parameter des Fluids auf den entfernten Endgeräten und/oder tragbaren Geräten verfügbar zu machen.

4. Zweistufiges Ventil (10) nach einem der Ansprüche 1 bis 3, **dadurch gekennzeichnet, dass** das elastische Element (46) aus einer Gegenfeder besteht, die durch Druck wirkt.

5. Zweistufiges Ventil (10) nach einem der Ansprüche 1 bis 4, **dadurch gekennzeichnet, dass** das Absperrelement (18) des Hauptventils aus einem Kolben besteht, der mit geradliniger Bewegung beweglich ist und sowohl durch die Schubwirkung einer Gegenfeder (38) als auch durch den Druck des Fluids, das durch das zweistufige Ventil (10) strömt, in einer normalerweise geschlossenen Stellung gehalten wird.

6. Zweistufiges Ventil (10) nach Anspruch 5, **dadurch gekennzeichnet, dass** das Absperrelement (18) des Hauptventils innen hohl ist und darin eine Ausgleichskammer (40) definiert, wobei das Fluid unter Druck steht, wenn der wenigstens eine Fluideintrittskanal (22) des Steuerventils durch das wenigstens eine Absperrelement (26) des Steuerventils geschlossen gehalten wird, sowie dadurch, dass das Absperrelement (18) des Hauptventils mit einer Membran (42) versehen ist, die den Hauptventilkörper (12) und den Steuerventilkörper (20) außerhalb trennt, das wenigstens teilweise Öffnen des wenigstens einen Absperrelements (26) des Steuerventils den wenigstens einen Fluideintrittskanal (22) des Steuerventils mit dem wenigstens einen Fluidaustrittskanal (24) des Steuerventils und dadurch mit dem Fluidaustrittskanal (16) des Hauptventils in Verbindung bringt, um sowohl den Druck innerhalb der Ausgleichskammer (40) als auch den schließenden Schub des Absperrelements (18) des Hauptventils zu reduzieren, so dass das Absperrelement (18) des Hauptventils sich dank des Drucks des in dem Fluideintrittskanal (14) des Hauptventils enthaltenen Fluids öffnet und dadurch das Einströmen des Fluids in den Hauptventilkörper (12) bewirkt.

7. Zweistufiges Ventil (10) nach Anspruch 6, **dadurch gekennzeichnet, dass** die Steuerkarte (32) mit einem Modulator versehen ist, der ausgebildet ist, um die Amplitude des elektrischen Stroms zu modulieren, der erforderlich ist, um den wenigstens einen, aus einer Formgedächtnislegierung hergestellten Draht (30) zu erhitzen, so dass die gesteuerte Verschiebung des wenigstens einen Absperrelements (26) des Steuerventils erhalten und folglich gesteuerte Druckschwankungen in der Ausgleichskammer (40) erhalten wird, um den Hub des Absperrelements (18) des Hauptventils proportional zu modulieren und damit unterschiedliche Fluidströmungsgeschwindigkeiten im Hauptventilkörper (12) zu bewirken.

8. Zweistufiges Ventil (10) nach einem der Ansprüche 2 bis 7, **dadurch gekennzeichnet, dass** die Steuerkarte (32) mit Mitteln zum Erfassen der relativen Stellung des Schubelements (44) versehen ist, das ausgebildet ist, um die vollständig oder teilweise geöffnete Stellung oder die normal geschlossene Stellung des Steuerventils festzustellen.

9. Zweistufiges Ventil (10) nach Anspruch 8, **dadurch gekennzeichnet, dass** die Mittel zum Erfassen der Stellung aus einem oder mehreren Stellungssensoren bestehen.

10. Zweistufiges Ventil (10) nach Anspruch 8, **dadurch gekennzeichnet, dass** die Mittel zum Erfassen der Stellung aus einer Vorrichtung zum Lesen des elektrischen Widerstands des wenigstens einen, aus einer Formgedächtnislegierung hergestellten Drahtes (30) bestehen.

11. Zweistufiges Ventil (10) nach einem der Ansprüche 1 bis 10, **dadurch gekennzeichnet, dass** es ein Fluidströmungsverteilungssystem umfasst, das außerhalb einer Steuerkammer (52) angeordnet ist, die durch Einfügen eines Verbindungskanals (56) den Fluideintrittskanal (14) des Hauptventils und den wenigstens einen Fluideintrittskanal (22) des Steuerventils in fluidische Verbindung bringt, wobei das Fluidströmungsverteilungssystem seinerseits eine Reihe von äußeren Kanälen umfasst, die eine im Wesentlichen kreisförmige Verteilungskammer (54) bilden, die die Steuerkammer (52) umgibt, wobei die Verteilungskammer (54) in fluidische Verbindung mit einer elastischen Trennmembran (48) gebracht wird, auf die das wenigstens eine Absperrelement (26) des Steuerventils einwirkt.

12. Zweistufiges Ventil (10) nach Anspruch 11, **dadurch gekennzeichnet, dass** es ein Paar von Fluideintrittskanälen (22) des Steuerventils umfasst, die voneinander vollkommen unabhängig sind, ein entsprechendes Paar von Fluidaustrittskanälen (24) des Steuerventils die ebenfalls voneinander vollkommen unabhängig sind und zwei getrennte Absperrelemente (26) des Steuerventils, die in der Lage sind, unabhängig und proportional von der Steuerkarte (32) gesteuert zu werden.

13. Zweistufiges Ventil (10) nach Anspruch 12, **dadurch gekennzeichnet, dass** es zwei, aus einer Formgedächtnislegierung hergestellte und unabhängig gesteuerte Drähte (30) umfasst, die auf die jeweiligen Absperrelemente (26) des Steuerventils einwirken.

14. Zweistufiges Ventil (10) nach einem der vorstehenden Ansprüche, **dadurch gekennzeichnet, dass** der Hauptventilkörper (12) einstückig mit dem Steuerventilkörper (20) ausgebildet ist und dass der wenigstens eine Fluideintrittskanal (22) des Steuerventils und der wenigstens eine Fluidaustrittskanal (24) des Steuerventils wenigstens teilweise in dem Hauptventilkörper (12) gebildet sind.

15. Zweistufiges Ventil (10) nach einem der vorstehenden Ansprüche, **dadurch gekennzeichnet, dass** der wenigstens eine aus einer Formgedächtnislegierung hergestellte Draht (30) einen Durchmesser zwischen 20 und 500 Mikrometer aufweist.

## Revendications

1. Vanne à deux étages (10) comprenant :
- un premier étage constitué par un corps de vanne principale (12) muni d'au moins un conduit d'entrée de fluide (14) pour l'entrée du fluide dans la vanne principale et d'au moins un conduit de sortie de fluide (16) pour la sortie du fluide hors de la vanne principale, entre le conduit d'entrée de fluide (14) de la vanne principale et le conduit de sortie de fluide (16) de la vanne principale étant interposé au moins un élément obturateur (18) de la vanne principale, configuré pour mettre sélectivement ledit conduit d'entrée de fluide (14) de la vanne principale en communication de fluide avec ledit conduit de sortie de fluide (16) de la vanne principale ; et
- un deuxième étage constitué par un corps de vanne pilote (20) muni d'au moins un conduit d'entrée de fluide (22) pour l'entrée du fluide dans la vanne pilote et d'au moins un conduit de sortie de fluide (24) pour la sortie du fluide hors de la vanne pilote, dans laquelle ledit au moins un conduit d'entrée de fluide (22) de la vanne pilote est mis en communication de fluide avec le conduit d'entrée de fluide (14) de la vanne principale, alors que ledit au moins un conduit de sortie de fluide (24) de la vanne pilote est mis en communication de fluide avec le conduit de sortie de fluide (16) de la vanne principale, et dans laquelle, entre ledit au moins un conduit d'entrée de fluide (22) de la vanne pilote et ledit au moins un conduit de sortie de fluide (24) de la vanne pilote, est interposé au moins un élément obturateur (26) de la vanne pilote, configuré pour mettre sélectivement ledit au moins un conduit d'entrée de fluide (22) de la vanne pilote en communication de fluide avec ledit au moins un conduit de sortie de fluide (24) de la vanne pilote, de manière que l'ouverture dudit au moins un élément obturateur (26) de la vanne pilote génère un flux de fluide passant à travers ledit au moins un conduit d'entrée de fluide (22) de la vanne pilote et ledit au moins un conduit de sortie de fluide (24) de la vanne pilote, la pression dudit flux de fluide générant l'ouverture de l'élément obturateur (18) de la vanne principale,
dans laquelle ledit au moins un élément obturateur (26) de la vanne pilote est actionnée par un dispositif actionneur (28) comprenant au moins un fil (30) réalisé en un alliage à mémoire de forme, ledit au moins un fil (30) étant adapté pour appliquer une force sur ledit au moins un élément obturateur (26) de la vanne pilote en conséquence d'une variation de température provoquée par l'effet Joule par la circulation d'un courant électrique à travers ledit au moins un fil (30), et dans laquelle ledit au moins un élément obturateur (26) de la vanne pilote consiste en un piston mobile avec un mouvement rectiligne, la vanne à deux étages (10) étant **caractérisée en ce que** ledit piston est maintenu dans une condition normalement fermée par un élément pousseur (44) faisant partie du dispositif actionneur (28) et actionné par un élément élastique (46), la force exercée par ledit au moins un fil (30) réalisé en un alliage à mémoire de forme sur ledit au moins un élément obturateur (26) de la vanne pilote permettant de surmonter la force élastique générée par ledit élément élastique (46), de manière à amener ledit au moins un élément obturateur (26) de la vanne pilote dans une condition partiellement ou complètement ouverte.

2. Vanne à deux étages (10) selon la revendication 1, **caractérisée en ce que** le dispositif actionneur (28) est muni d'un système électronique de commande et de communication comprenant une carte de commande (32) muni à son tour à la fois de connexions d'alimentation électrique respectives et de moyens de connexion de fonctionnement (34) avec ledit au moins un fil (30) réalisé en un alliage à mémoire de forme, ladite carte de commande (32) étant configurée pour obtenir indirectement des paramètres physiques déterminés du fluide par le biais des caractéristiques dudit au moins un fil (30), lesdits paramètres physiques du fluide étant sélectionnés à partir du groupe comprenant une pression, un débit et une température.

3. Vanne à deux étages (10) selon la revendication 2, **caractérisée en ce que** le système électronique de commande et de communication est muni d'un module de communication à distance sans fil (36), pouvant être interfacé par l'intermédiaire du Web avec des terminaux distants et/ou avec des dispositifs portables et configuré pour rendre les paramètres physiques du fluide disponibles sur lesdits terminaux distants et/ou dispositifs portables.

4. Vanne à deux étages (10) selon l'une quelconque des revendications 1 à 3, **caractérisée en ce que** ledit élément élastique (46) consiste en un ressort d'opposition fonctionnant en compression.

5. Vanne à deux étages (10) selon l'une quelconque des revendications 1 à 4, **caractérisée en ce que** l'élément obturateur (18) de la vanne principale consiste en un piston mobile avec un mouvement rectiligne et maintenu dans une condition normalement fermée à la fois par l'action de poussée d'un ressort d'opposition (38) et par la pression du fluide s'écoulant dans la vanne à deux étages (10).

6. Vanne à deux étages (10) selon la revendication 5, **caractérisée en ce que** l'élément obturateur (18) de la vanne principale est intérieurement creux et définit à l'intérieur une chambre d'équilibrage (40), dans laquelle le fluide est sous pression quand ledit au moins un conduit d'entrée de fluide (22) de la vanne pilote est maintenu fermé par ledit au moins un élément obturateur (26) de la vanne pilote, et **en ce que** l'élément obturateur (18) de la vanne principale est muni d'une membrane (42) qui sépare extérieurement le corps de vanne principale (12) et le corps de vanne pilote (20), l'ouverture au moins partielle dudit au moins un élément obturateur (26) de la vanne pilote met en communication ledit au moins un conduit d'entrée de fluide (22) de la vanne pilote avec ledit au moins un conduit de sortie de fluide (24) de la vanne pilote et, par conséquent, avec le conduit de sortie de fluide (16) de la vanne principale, de manière à réduire à la fois la pression à l'intérieur de la chambre d'équilibrage (40) et la poussée de fermeture dudit élément obturateur (18) de la vanne principale, de manière que l'élément obturateur (18) de la vanne principale s'ouvre à cause de la pression du fluide contenu dans le conduit d'entrée de fluide (14) de la vanne principale, en forçant le flux de fluide à passer dans le corps de vanne principale (12).

7. Vanne à deux étages (10) selon la revendication 6, **caractérisée en ce que** la carte de commande (32) est équipée d'un modulateur configuré pour moduler en amplitude le courant électrique nécessaire pour chauffer ledit au moins un fil (30) réalisé à partir d'un alliage à mémoire de forme, de manière à obtenir le déplacement contrôlé dudit au moins un élément obturateur (26) de la vanne pilote et, par conséquent, pour obtenir des variations contrôlées de la pression dans la chambre d'équilibrage (40), de manière à moduler proportionnellement la course de l'élément obturateur (18) de la vanne principale de manière à entraîner des débits de fluide différents dans le corps de vanne principale (12).

8. Vanne à deux étages (10) selon l'une quelconque des revendications 2 à 7, **caractérisée en ce que** la carte de commande (32) est munie de moyens pour détecter la position relative de l'élément pousseur (44), configurés pour vérifier la condition partiellement ou complètement ouverte, ou la condition normalement fermée, de la vanne pilote.

9. Vanne à deux étages (10) selon la revendication 8, **caractérisée en ce que** lesdits moyens de détection de position consistent en un ou plusieurs capteurs de position.

10. Vanne à deux étages (10) selon la revendication 8, **caractérisée en ce que** lesdits moyens de détection de position consistent en un dispositif de mesure de la résistance électrique dudit au moins un fil (30) réalisé en alliage à mémoire de forme.

11. Vanne à deux étages (10) selon l'une quelconque des revendications 1 à 10, **caractérisée en ce qu'**elle comprend un système de distribution de flux de fluide agencé à l'extérieur d'une chambre pilote (52) qui met en communication de fluide, par le biais de l'interposition d'un conduit de jonction (56), le conduit d'entrée de fluide (14) de la vanne principale et ledit au moins un conduit d'entrée de fluide (22) de la vanne pilote, le système de distribution de flux de fluide comprenant à son tour un ensemble de conduits externes qui forment une chambre de distribution (54), ayant une forme sensiblement circulaire, qui entoure ladite chambre pilote (52), ladite chambre de distribution (54) étant mise en communication de fluide avec une membrane de séparation élastique (48) sur laquelle agit ledit au moins un élément obturateur (26) de la vanne pilote.

12. Vanne à deux étages (10) selon la revendication 11, **caractérisée en ce qu'**elle comprend une paire de conduits d'entrée de fluide (22) de la vanne pilote, totalement indépendants l'un de l'autre, une paire correspondante de conduits de sortie de fluide (24) de la vanne pilote, également totalement indépendants l'un de l'autre, et deux éléments obturateurs distincts (26) de la vanne pilote, adaptés pour être commandés indépendamment et proportionnellement par le biais de la carte de commande (32).

13. Vanne à deux étages (10) selon la revendication 12, **caractérisée en ce qu'**elle comprend deux fils (30) réalisés en alliage à mémoire de forme et commandés indépendamment, qui agissent sur les éléments obturateurs respectifs (26) de la vanne pilote.

14. Vanne à deux étages (10) selon l'une quelconque des revendications précédentes, **caractérisée en ce que** the corps de vanne principale (12) est réalisé d'une seule pièce avec le corps de vanne pilote (20) et **en ce que** ledit au moins un conduit d'entrée de fluide (22) de la vanne pilote et ledit au moins un conduit de sortie de fluide (24) de la vanne pilote sont formés au moins en partie sur le corps de vanne principale (12).

15. Vanne à deux étages (10) selon l'une quelconque des revendications précédentes, **caractérisée en ce que** ledit au moins un fil (30) réalisé en alliage à mémoire de forme a un diamètre de section compris entre 20 et 500 microns.
